# EUROPÄISCHE PATENTANMELDUNG

(11) **EP 1 783 365 A2**
(43) Veröffentlichungstag der Anmeldung: **09.05.2007**
(21) Anmeldenummer: 06021574.6
(22) Anmeldetag: 14.10.2006
(51) Int. Cl.: F03D 11/00, F03D 7/04

(54) **Verfahren zum Übertragen von Daten an eine Windenergieanlage und Windenergieanlage mit geigneter Auswerteeinrichtung**

(30) Priorität: 04.11.2005 DE 102005053185
(71) Anmelder: NORDEX ENERGY GmbH, 22848 Norderstedt (DE)
(72) Erfinder: Schubert, Thomas, 25479 Ellerau (DE)
(74) Vertreter: Hauck Patent- und Rechtsanwälte

(57) **Zusammenfassung**

Verfahren zur Übertragung von Daten an eine Windenergieanlage und/oder einen Windpark mit mehreren Windenergieanlagen, wobei eine Steuereinrichtung für eine Betriebsführung der Windenergieanlage oder für eine oder mehrere Windenergieanlagen in dem Windpark vorgesehen ist, die Steuereinheit ist über eine Auswerteeinrichtung mit einem Telefonempfänger für ein öffentliches Telefonnetz verbunden, das Verfahren weist die folgenden Schritte auf:
- eine Auswertevorrichtung bestimmt aus über den Telefonempfänger empfangenen Daten Identifikationsdaten und überprüft, ob diese Identifikationsdaten zulässig sind,
- wenn zulässige Identifikationsdaten vorliegen, dann überprüft die Auswertevorrichtung, ob mit den empfangenen Daten Steuerdaten empfangen wurden,
- wenn Steuerdaten vorliegen, dann werden diese an die Steuereinrichtung weitergeleitet, die die Steuerdaten zur Betriebsführung einsetzt.

## Beschreibung

Die vorliegende Erfindung betrifft ein Verfahren zum Übertragen von Daten an eine Windenergieanlage und/oder an einen Windpark mit mehreren Windenergieanlagen. Die Erfindung betrifft ebenfalls einen Windpark und eine Windenergieanlage mit einer Steuereinrichtung zur Betriebsführung der Windenergieanlage.

Windenergieanlagen und Windparks werden von einer oder mehreren Fernüberwachungszentrale(n) überwacht. Die Überwachung umfasst dabei regelmäßig die Abfrage von Betriebs- und Zustandsdaten, Betriebsprotokollen und anderen Berichten. Ferner besteht in den Fernüberwachungszentralen auch die Möglichkeit bestimmte Funktionen der Windenergieanlage oder des Windparks zu steuern. Bei den Funktionen der Windparks kann es sich um Funktionen der Windenergieanlagen in dem Windpark oder um sonstige Einrichtungen handeln, die beispielsweise das Parkmanagement betreffen. Auch ist es möglich über die Fernüberwachungszentrale Betriebsparameter der Windenergieanlage oder des Windparks zu ändern.

WO 03/030329 beschreibt eine Regelung für einen Windpark, bei der den einzelnen Windenergieanlagen ein Sollwert unterhalb der Nennleistung vorgegebenen wird. Die Steuerungsdaten und Informationsdaten werden dabei drahtlos übertragen.

Aus EP 1 519 040 A1 ist ein System bekannt, bei dem eine Verbindung zwischen einer Fernüberwachungszentrale und einer Windenergieanlage über ein Überwachungsnetz und ein Steuernetz vorgesehen ist. Hierzu ist eine Prozeßsteuersoftware vorgesehen, die über eine Netzschnittstelle angesprochen wird. Die Netzschnittstelle stellt unterschiedliche Zugangsebenen bereit, um Gruppen von Parametern der Windenergieanlage zu ändern und zu betrachten. Zugangsdaten sind beispielsweise die Benutzerkennung und ein zugehöriges Paßwort.

Bei dem bekannten System ist ein netzwerkfähiger Computer notwendig, der mit einer speziell angepaßten Software ausgerüstet ist. Solche Computer sind lediglich in der Fernüberwachungszentrale vorhanden, so dass die Kommunikation über das Überwachungs- und Steuernetz der Fernüberwachungszentrale erfolgen muss. Durch den Umweg über die Fernüberwachungszentrale wird das Einstellen der Netzparameter deutlich verzögert.

Der Erfindung liegt die Aufgabe zugrunde ein Verfahren zur Änderung von Daten in einer Windenergieanlage bereitzustellen, dass mit einfachen Mitteln einen schnellen und leicht handhabbaren Zugang zur Steuereinheit der Windenergieanlage erlaubt.

Erfindungsgemäß wird die Aufgabe durch ein Verfahren mit den Merkmalen aus Anspruch 1 gelöst. Auch eine Windenergieanlage mit den Merkmalen aus Anspruch 12 und ein Windpark gemäß Anspruch 18 löst die der Erfindung zugrunde liegende Aufgabe. Vorteilhafte Ausgestaltungen von Verfahren und Windenergieanlage bilden die Gegenstände der Unteransprüche.

Das erfindungsgemäße Verfahren dient zum Übertragen von Daten an eine Windenergieanlage und/oder an einen Windpark mit mehreren Windenergieanlagen. Eine Steuereinrichtung ist zur Betriebsführung der Windenergieanlage oder für eine oder mehrere Windenergieanlagen in dem Windpark vorgesehen. Die Betriebsführung umfasst hierbei einen oder mehrere Parameter und sonstige Steuerdaten, die von der Steuereinrichtung verwendet werden.

Die Steuereinrichtung ist über eine Auswerteeinrichtung mit einem Telefonempfänger für ein öffentliches Telefonnetz verbunden. Bei dem Telefonempfänger handelt es sich beispielsweise um ein Festnetzgerät, es können jedoch auch ein Empfänger für ein GSM-Netz oder für ein sonstiges Funk- oder Mobilnetz vorgesehen sein. Bei dem erfindungsgemäßen Verfahren werden in einem ersten Schritt Identifikationsdaten aus den über den Telefonempfänger empfangenen Daten bestimmt. Liegen die Identifikationsdaten vor, so werden diese dahingehend geprüft, ob die Identifikationsdaten zu einem weiteren Zugang berechtigen. Wenn zulässige Identifikationsdaten vorliegen, wird in einem nachfolgenden Schritt von der Auswertevorrichtung geprüft, ob mit den empfangenen Daten Steuerdaten übermittelt wurden. Wenn diese Prüfung durch die Auswertevorrichtung ergibt, dass zulässige Steuerdaten vorliegen, dann werden diese an die Steuereinrichtung weitergeleitet, um zur Betriebsführung eingesetzt zu werden.

In einer bevorzugten Ausgestaltung wird mit den übertragenen Daten eine vorbestimmte Signalfolge als Identifikationsdaten übermittelt. Anhand der vorbestimmten Signalfolge kann dann der Absender identifiziert werden, um dessen Zugangsberechtigung zu überprüfen. Zusätzlich oder alternativ kann die Auswerteeinrichtung eine mit den Daten an den Telefonempfänger übermittelte Telefonnummer als Identifikationsdatum überprüfen. Bei den meisten öffentlichen Telefonnetzen wird bei einem Anruf die Nummer des anrufenden Teilnehmergeräts mit übertragen. Bei dem erfindungsgemäßen Verfahren wird diese Telefonnummer von der Auswerteeinrichtung überprüft und beispielsweise mit einer Reihe von gespeicherten zulässigen Telefonnummern verglichen.

In einer zweckmäßigen Ausgestaltung des erfindungsgemäßen Verfahrens wird mit den empfangenen Daten eine Signalfolge als Steuerdaten übertragen. Zweckmäßigerweise besitzen die Steuerdaten einen Befehlsteil, der einen Code für einen von der Steuereinrichtung auszuführenden Befehl bezeichnet. Dem Befehlsteil kann, je nach Natur des Befehls, ein Datenteil folgen, der die zu verwendenden Steuerparameter näher bezeichnet.

In einer besonders bevorzugten Ausgestaltung des erfindungsgemäßen Verfahrens wird mit den Steuerdaten ein Sollwert für die Leistungsabgabe der Windenergieanlage übermittelt. Der Sollwert kann dabei einen Wert zwischen 0 kW und der Nennleistung der Windenergieanlage betragen. Die Steuereinrichtung steuert bevorzugt den vorgegebenen Sollwert für die Leistungsabgabe an. Hierbei erfolgt bevorzugt eine Regelung der abgegebenen Leistung auf den Sollwert. Um eine Energieerzeugung nach einem Zeitplan bereitstellen zu können, ist in einer Weiterführung des Verfahrens vorgesehen, die Steuerdaten zusätzlich zu dem Sollwert für die abzugebende Leistung mit Zeitdaten zu versehen, die angeben wann und/oder für welche Dauer der Sollwert angesteuert wird. Hierzu können die Steuerdaten bevorzugt in einer Vielzahl von Sollwerten mit zugehörigen Zeitdaten versehen sein, die für eine bestimmte Zeitdauer den zeitlichen Verlauf der Sollwerte angeben. Bei dieser Weiterbildung des erfindungsgemäßen Verfahrens kann mit Hilfe der Steuerdaten der zeitliche Verlauf des Sollwerts für die Windenergieanlage vorgegeben werden.

In einer ebenfalls bevorzugten Ausgestaltung können die mit dem Anruf übertragenen Daten als eine Textnachricht, insbesondere eine "short message service-Nachricht" (SMS-Nachricht) übertragen werden.

Die der Erfindung zugrunde liegende Aufgabe wird ebenfalls durch eine Windenergieanlage mit einer Steuereinrichtung für eine Betriebsführung der Windenergieanlage gelöst, wobei die Windenergieanlage eine Auswertevorrichtung besitzt, die mit einem Telefonempfänger und der Steuereinrichtung zur Übertragung von Daten verbunden ist. Die Auswertevorrichtung ist erfindungsgemäß so ausgelegt, dass über den Telefonempfänger empfangene Daten in Identifikationsdaten und Steuerdaten aufgeteilt werden und die Identifikationsdaten auf ihre Zulässigkeit geprüft werden. In einer bevorzugten Ausgestaltung ist der Telefonempfänger mit Mitteln versehen, um die Telefonnummer eines eingehenden Anrufes zu empfangen und mit einer Liste von zulässigen Nummern zu vergleichen. Ferner kann die Auswertevorrichtung alternativ oder zusätzlich mit Mitteln versehen sein, um eine in den Identifikationsdaten enthaltene Kennziffer mit einer Liste von zulässigen Kennziffern zu vergleichen.

In einer bevorzugten Weiterführung ist die Auswerteeinrichtung der Windenergieanlage ausgelegt, um aus den Steuerdaten einen Sollwert für die Leistungsabgabe zu ermitteln und an die Steuereinrichtung weiterzuleiten. Die Steuereinrichtung steuert oder regelt den Istwert der abgegebenen Leistung auf den empfangenen Sollwert. Hierbei können Sollwerte auch nach einem vorgegebenen Zeitplan angesteuert werden.

Erfindungsgemäß wird die Aufgabe ebenfalls durch einen Windpark mit mehreren Windenergieanlagen gelöst, der eine Steuereinrichtung für eine Betriebsführung des Windparks oder mindestens einer Windenergieanlage in dem Windpark besitzt. Ferner ist eine Auswertevorrichtung vorgesehen, die mit einem Telefonempfänger und der Steuerrichtung zur Übertragung von Daten verbunden ist, wobei die Auswertevorrichtung ausgelegt ist, um über den Telefonempfänger empfangene Daten in Identifikations- und Steuerdaten aufzuteilen und die Zulässigkeit der Identifikationsdaten zu prüfen.

Die Erfindung wird nachfolgend anhand eines Beispiels näher erläutert.

Es zeigt:
- Figur 1: eine schematische Ansicht einer Fernüberwachungszentrale mit drei Windenergieanlagen,
- Figur 2: eine Fernüberwachungszentrale in einem Blockschaltbild mit unterschiedlichen Arten von Kraftwerken und
- Figur 3: ein Blockdiagramm zum Ablauf des Verfahrens.

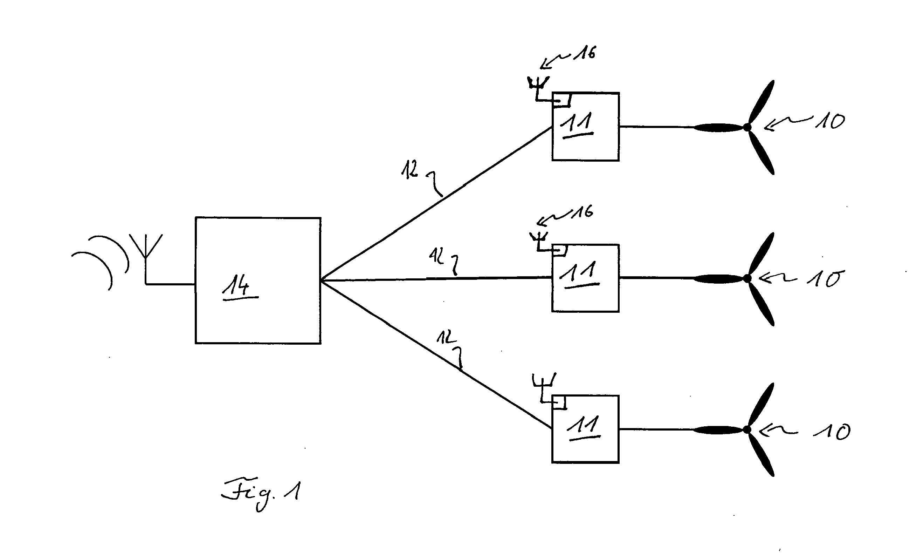

Figur 1 zeigt schematisch drei Windenergieanlagen 10, mit jeweils einer Steuereinheit 11, die über eine Verbindung 12 mit einer Fernüberwachungszentrale 14 Daten austauscht. Die Fernüberwachungszentrale 14 kann Daten und Vorgänge in der Windenergieanlage auslesen und anhand der Daten die Funktion und den Zustand der Windenergieanlage prüfen. Ferner können auch neue Parameter für eine Steuerung von der Fernüberwachungszentrale 14 an die Windenergieanlage überspielt werden.

Die Kommunikation zwischen Fernüberwachungszentrale 14 und Steuerung der Windenergieanlage 10 verläuft hierbei jeweils über Schnittstellen von entsprechenden Computern (nicht dargestellt). Ferner ist in der Fernüberwachungszentrale 14 eine graphische Benutzerschnittstelle vorgesehen, die ein Auslesen und Darstellen der empfangenen Daten erlaubt.

In dem dargestellten Beispiel ist in der Steuereinheit 11 der Windenergieanlage 10 ein Empfänger 16 vorgesehen, der zum Empfang von Telefonsignalen ausgebildet ist. Um in die Steuerung der Windenergieanlage einzugreifen, kann über ein mobiles Telefongerät eine SMS-Nachricht gesendet werden. Über das mobile Telefonnetz wird die Nachricht an den Empfänger 16 weitergeleitet. Der Telefonempfänger 16 in der Windenergieanlage erhält eine SMS-Nachricht, in der Identifikationsdaten und Steuerdaten enthalten sind.

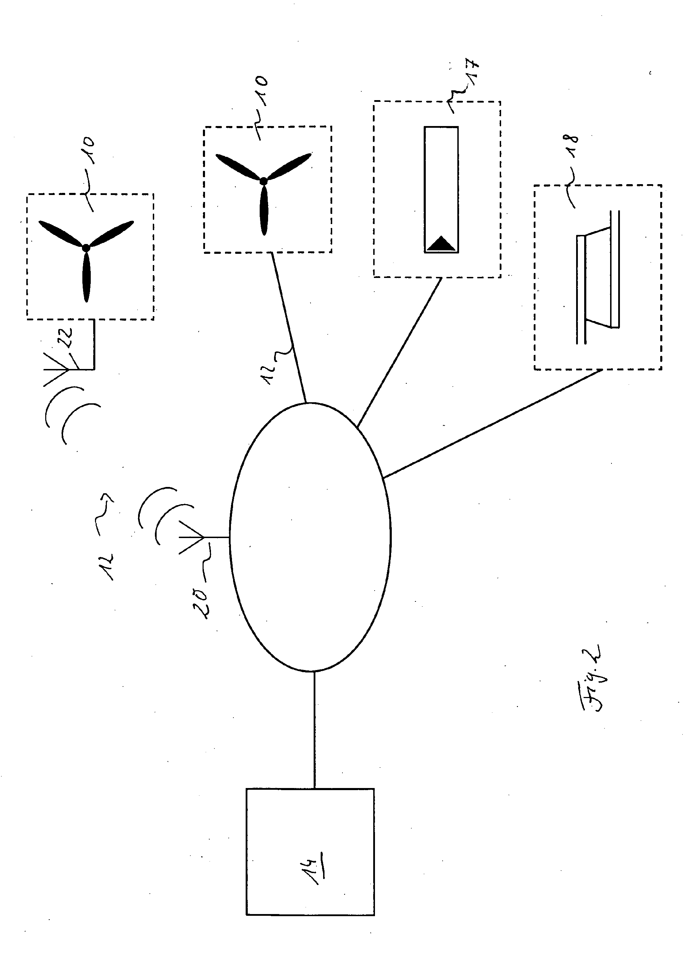

Figur 2 zeigt eine Fernüberwachung 14, die beispielhaft zwei Windenergieanlagen 10, ein Solarkraftwerk 17 und brennkraftmaschinenbetriebene Anlagen 18 zeigt. Wie in Fig. 2 dargestellt, kann die Kommunikation zwischen Überwachungszentrale und Windenergieanlage über ein Sender- und Empfängerpaar 20, 22 erfolgen.

Die Vorgabe von Sollwerten für die Leistungsabgabe ermöglicht es, zur Bereitstellung einer geregelten Leistung Windenergieanlagen und andere Anlagen für erneuerbare Energien in das Stromnetz einzubinden. Vorgaben zu dem Leistungsverhalten erfolgen durch die Netzbetreiber (EVU) und richten sich nach dem Bedarf der Energieabnehmer. Die Vorgabe von Sollwerten ist insbesondere für Energiemakler und Energiebörsen von Bedeutung, da das erfindungsgemäße Verfahren diesen einen direkten, einfachen und automatisierten Zugang zu den Energieanlagen verschafft.

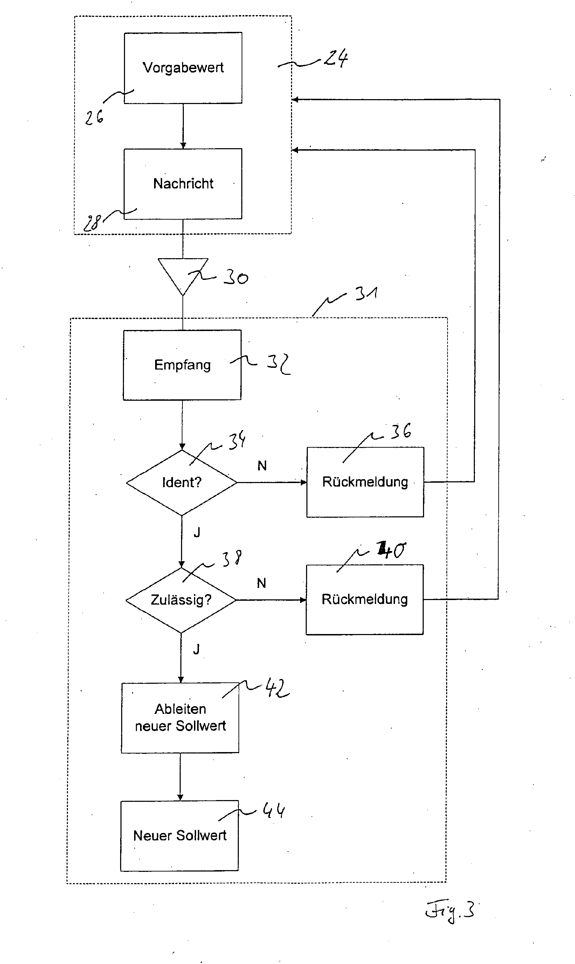

Figur 3 erläutert das erfindungsgemäße Verfahren am Beispiel eines Sollwerts für die abzugebende Leistung in einem Blockschaltbild. In einem ersten Verfahrensschritt 24 wird ein Vorgabewert 26 für die abzugebende Leistung erzeugt. Ferner wird mit dem Vorgabewert 26 eine Nachricht 28 generiert. Die Nachricht 28 wird zur Versendung noch mit einem Verschlüsselungsverfahren verschlüsselt, um mit diesem ein Manipulieren der Nachrichten zu verhindern. In Verfahrensschritt 30 wird die verschlüsselte Nachricht an die Windenergienanlage oder eine Zentralsteuerung eines Windparks übertragen. Die mit 31 zusammengefaßten Verfahrensschritte laufen in der Steuerung ab. In einem ersten Schritt 32 werden die Daten empfangen und, falls verschlüsselt, entschlüsselt. In einem nachfolgenden Schritt 34 wird die Identität und Berechtigung des Absenders der Nachricht überprüft. Bei fehlender Zugangsberechtigung erfolgt eine Rückmeldung 36 an den Sender.

In einem nachfolgenden Schritt 38 wird geprüft, ob die Bereitstellung der geforderten Leistung möglich und zulässig ist. Beispielsweise kann geprüft werden, ob die vorgegebene Leistung gemäß dem Leistungsverhalten in der Anlage und der aktuellen Wettervorhersage möglich ist. Auch kann geprüft werden, ob die Nennleistung der Anlage oder des Netzanschlusses bei dem vorgegebenen Wert eingehalten wird. Ferner kann auch geprüft werden, ob nicht bereits gegenteilige Anforderungen vorliegen, so daß die Bereitstellung der neu angeforderten Leistung nicht möglich ist. Bei einem Fehlschlag dieser Prüfung erfolgt ebenfalls wieder eine Rückmeldung 40 unter Angabe eines Grundes, warum die Bereitstellung nicht möglich ist. In einem weiteren Verfahrensschritt 42 wird aus der Leistungsvorgabe ein neuer Sollwert für die Einstellung einer Windenergieanlage abgeleitet. Insbesondere werden beispielsweise bei einem Windpark Sollwerte für die einzelnen Anlagen abgeleitet. Die so ermittelten Sollwerte 44 werden an die Steuerung zur weiteren Verarbeitung weitergeleitet.

Nicht in der Übersicht in Figur 3 dargestellt sind weitere Verfahrensschritte, die ebenfalls durchgeführt werden können. Beispielsweise können zur späteren Rekonstruktion die Nachrichten protokolliert werden, ebenso wie die Daten zur Leistungsanforderung und das Ergebnis der Prüfung. Ferner kann vorgesehen sein, der anfordernden Stelle Rückmeldung über den Leistungs-Istwert zu geben. Auch können Meldungen an den Betreiber der Windenergieanlage und/oder den Netzbetreiber zurückgesendet werden. Die Rückmeldung des Leistungs-Istwertes kann dabei auch mit Zeitvorgaben für den Beginn und/oder das Ende der Leistungsvorgabe verglichen werden.

## Patentansprüche

1. Verfahren zur Übertragung von Daten an eine Windenergieanlage und/oder einen Windpark mit mehreren Windenergieanlagen, wobei eine Steuereinrichtung für eine Betriebsführung der Windenergieanlage oder für eine oder mehrere Windenergieanlagen in dem Windpark vorgesehen ist, die Steuereinheit ist über eine Auswerteeinrichtung mit einem Telefonempfänger für ein öffentliches Telefonnetz verbunden, das Verfahren weist die folgenden Schritte auf:
- eine Auswertevorrichtung bestimmt aus über den Telefonempfänger empfangenen Daten Identifikationsdaten und überprüft, ob diese Identifikationsdaten zulässig sind,
- wenn zulässige Identifikationsdaten vorliegen, dann überprüft die Auswertevorrichtung, ob mit den empfangenen Daten Steuerdaten empfangen wurden,
- wenn Steuerdaten vorliegen, dann werden diese an die Steuereinrichtung weitergeleitet, die die Steuerdaten zur Betriebsführung einsetzt.

2. Verfahren nach Anspruch 1, **dadurch gekennzeichnet, dass** mit den übertragenen Daten eine vorbestimmte Signalfolge als Identifikationsdaten übermittelt wird.

3. Verfahren nach Anspruch 1 oder 2, **dadurch gekennzeichnet, dass** die Auswerteeinrichtung eine mit den Daten aus dem Telefonempfänger übermittelte Telefonnummer als Identifikationsdaten überprüft.

4. Verfahren nach einem der Ansprüche 1 bis 3, **dadurch gekennzeichnet, dass** mit den empfangenen Daten eine Signalfolge als Steuerdaten übertragen wird.

5. Verfahren nach Anspruch 4, **dadurch gekennzeichnet, dass** die Steuerdaten einen Befehlsteil enthalten, der einen Code für einen von der Steuereinrichtung auszuführenden Befehl bezeichnet.

6. Verfahren nach Anspruch 5, **dadurch gekennzeichnet, daß** die Steuerdaten einen Sollwert für die Leistungsabgabe der Windenergieanlage aufweisen.

7. Verfahren nach Anspruch 6, **dadurch gekennzeichnet, daß** die Steuereinrichtung ansprechend auf den vorgegebenen Sollwert eine entsprechende Leistungsvorgabe ansteuert.

8. Verfahren nach Anspruch 7, **dadurch gekennzeichnet, daß** die Steuerdaten zusätzlich zu dem Sollwert für die abzugebende Leistung Zeitdaten enthält, die angeben, wann und/oder für welche Dauer der Sollwert angesteuert wird.

9. Verfahren nach einem der Ansprüche 6 bis 8, **dadurch gekennzeichnet, daß** die Steuerdaten eine Vielzahl von Sollwerten mit zugehörigen Zeitdaten enthalten, die für eine bestimmte Zeitdauer den zeitlichen Verlauf der Sollwerte angeben.

10. Verfahren nach Anspruch 5, **dadurch gekennzeichnet, dass** die Steuerdaten für vorbestimmte Befehle einen Befehlsteil und einen Datenteil aufweisen, der Steuerparameter für den Befehlsteil bezeichnet.

11. Verfahren nach einem der Ansprüche 1 bis 10, **dadurch gekennzeichnet, dass** die mit dem Anruf übertragenen Daten als Textnachricht übertragen werden.

12. Windenergieanlage mit einer Steuereinrichtung für eine Betriebsführung der Windenergieanlage und einer Auswertevorrichtung, die mit einem Telefonempfänger und der Steuereinrichtung zur Übertragung der Daten verbunden ist, wobei die Auswertevorrichtung ausgelegt ist, um über den Telefonempfänger empfangene Daten in Identifikationsdaten und Steuerdaten aufzuteilen und die Zulässigkeit der Identifikationsdaten zu prüfen.

13. Windenergieanlage nach Anspruch 12, **dadurch gekennzeichnet, dass** der Telefonempfänger mit Mitteln versehen ist, um die Telefonnummer eines eingegebenen Anrufs zu empfangen und mit einer Liste von zulässigen Nummern zu vergleichen.

14. Windenergieanlage nach Anspruch 12 oder 13, **dadurch gekennzeichnet, dass** die Auswertevorrichtung mit Mitteln versehen ist, um eine in den Identifikationsdaten enthaltene Kennziffer mit einer Liste von zulässigen Kennziffern zu vergleichen.

15. Windenergieanlage nach einem der Ansprüche 12 bis 14, **dadurch gekennzeichnet, daß** die Auswertevorrichtung ausgelegt ist, um aus den Steuerdaten einen Sollwert für die Leistungsabgabe zu ermitteln und an die Steuereinrichtung weiterzuleiten.

16. Windenergieanlage nach Anspruch 15, **dadurch gekennzeichnet, daß** die Steuereinrichtung die abzugebende Leistung auf den empfangenen Sollwert steuert.

17. Windenergieanlage nach Anspruch 15, **dadurch gekennzeichnet, daß** die Steuereinrichtung die abzugebende Leistung auf den empfangenen Sollwert regelt.

18. Windpark mit mehreren Windenergieanlagen, mit einer Steuereinrichtung für eine Betriebsführung des Windparks oder mindestens einer Windenergieanlage in dem Windpark und einer Auswertevorrichtung, die mit einem Telefonempfänger und der Steuereinrichtung zur Übertragung von Daten verbunden ist, wobei die Auswertevorrichtung ausgelegt ist, über den Telefonempfänger empfangene Daten in Identifikations- und Steuerdaten aufzuteilen und die Zulässigkeit der Identifikationsdaten zu prüfen.
